# EUROPÄISCHE PATENTANMELDUNG

(11) **EP 1 464 799 A1**
(43) Veröffentlichungstag der Anmeldung: **06.10.2004**
(21) Anmeldenummer: 03100841.0
(22) Anmeldetag: 31.03.2003
(51) Int. Cl.: F01N 3/30, F01N 3/32, F01N 3/22

(54) **Verfahren zum Starten einer Brennkraftmaschine**

(71) Anmelder: Ford Global Technologies, LLC, A subsidary of Ford Motor Company, Dearborn, MI 48126 (US)
(72) Erfinder: Grieser, Klemens, 40764, Langenfeld (DE); Kramer, Ulrich, 51427, Bergisch Gladbach (DE); Hohenboeken, Kay, 50733, Koeln (DE)
(74) Vertreter: Drömer, Hans-Carsten, Dr.-Ing.

(57) **Zusammenfassung**

Die Erfindung betrifft ein Verfahren zum Starten einer Brennkraftmaschine, in deren Abgasweg (7) ein Oxidationskatalysator (6, 8) angeordnet ist. Bei dem Verfahren wird dafür gesorgt, daß während des Startvorganges im Abgasweg (7) eine ausreichende Sauerstoffmenge für die Oxidation von vermehrt anfallenden HCund CO-Emissionen durch den Oxidationskatalysator (6, 8) bereitsteht. Insbesondere wenn der Katalysator aufgrund eines nur kurzen Motorstillstands noch seine Betriebstemperatur aufweist, kann hierdurch eine vollständige Entfernung der überhöhten HC- und CO-Emissionen während eines Startvorganges erreicht werden.

## Beschreibung

Die Erfindung betrifft ein Verfahren zum Starten einer Brennkraftmaschine, in deren Abgasweg ein Abgasnachbehandlungssystem mit mindestens einem Oxidationskatalysator angeordnet ist. Ferner betrifft sie eine zur Durchführung eines derartigen Verfahrens eingerichtete Brennkraftmaschine.

Zur Verbesserung der Kraftstoffausnutzung in Fahrzeugen mit Verbrennungsmotor erfolgt häufig anstelle eines Leerlaufbetriebes ein vollständiges Abstellen des Motors, wenn keine Antriebsleistung benötigt wird. Der Motor muß dann neu angelassen werden, wenn seine Leistung wieder benötigt wird. Für das Anlassen weisen herkömmliche Brennkraftmaschinen spezielle Hilfsaggregate wie etwa einen Anlassermotor oder einen als Motor einsetzbaren Generator (sogen. Startergenerator) auf. Hierbei handelt es sich um verhältnismäßig große und kostenaufwändige Einrichtungen, da für das Anlassen des Verbrennungsmotors eine hohe elektrische Leistung erforderlich ist.

Darüber hinaus ist es bekannt, eine Brennkraftmaschine durch Auslösen einer Verbrennung anzulassen. Dies ist insbesondere bei Brennkraftmaschinen mit Funkenzündung und Direkteinspritzung möglich. Der direkt in die Brennkammer eingespritzte Kraftstoff wird dabei durch einen Funken gezündet, und die anschließende Explosion des Luft-Kraftstoff-Gemisches bewegt den Kolben und startet den Motor, ohne daß die Kurbelwelle durch ein zusätzliches Hilfsaggregat bewegt werden müßte.

Bei einer Kombination obiger Methoden erfolgt während des Anlassens einer Brennkraftmaschine durch einen Startermotor bereits früh bzw. von Anfang an eine Einspritzung und Verbrennung in den Zylindern, um hierdurch den Anlasser zu unterstützen.

Wie aus verschiedenen Untersuchungen bekannt ist (vgl. beispielsweise Burkhard Voss, "Zeitweise Motorabschaltung - kritische Zeiten bezüglich Schadstoffemissionen und Kraftstoffverbrauch", Automobiltechnische Zeitschrift, Heft 92, 1990), verursachen alle vorstehend genannten Vorgehensweisen zum Starten einer Brennkraftmaschine erhebliche Emissionsspitzen an Kohlenwasserstoffen (HC) und Kohlenmonoxid (CO) während und direkt nach dem Neustart. Das aus Gründen der Kraftstoffersparnis an sich wünschenswerte Abstellen der Brennkraftmaschine auch für kurze Standzeiten des Kraftfahrzeuges führt daher zu einer signifikanten Zunahme der HC- und CO-Emissionen.

Vor diesem Hintergrund war es Aufgabe der vorliegenden Erfindung, Mittel zum Starten einer Brennkraftmaschine unter verringerten HC- beziehungsweis e CO-Emissionen bereitzustellen.

Diese Aufgabe wird durch ein Verfahren mit den Merkmalen des Anspruchs 1 sowie durch eine Brennkraftmaschine mit den Merkmalen des Anspruchs 7 gelöst. Vorteilhafte Ausgestaltungen sind in den Unteransprüchen enthalten.

Das erfindungsgemäße Verfahren betrifft allgemein das Starten einer Brennkraftmaschine, in deren Abgasweg ein Abgasnachbehandlungssystem mit mindestens einem Oxidationskatalysator angeordnet ist. Das Verfahren ist dadurch gekennzeichnet, daß für den Zeitraum während des Startens der Brennkraftmaschine eine solche Sauerstoffmenge im Abgasweg bereitgestellt wird, die eine möglichst vollständige Oxidation von Kohlenwasserstoffen (HC) und Kohlenmonoxid (CO) durch das Abgasnachbehandlungssystem erlaubt.

Das Verfahren führt insbesondere in Situationen eines Neustarts einer Brennkraftmaschine nach einer verhältnismäßig kurzen Stillstandszeit des Motors zu einer erheblichen Reduzierung der HC- und CO-Emissionen. Diese positive Wirkung beruht darauf, daß der im Abgasweg der Brennkraftmaschine angeordnete Oxidationskatalysator sich in diesen Fällen üblicherweise noch auf einer ausreichend hohen Temperatur befindet, um katalytisch wirksam zu sein, das heißt, um HC und CO zu oxidieren. Aufgrund der noch unvollständigen Verbrennung in der Brennkraftmaschine während der Startphase fallen jedoch größere Mengen an Kohlenwasserstoffen und an Kohlenmonoxid an, als der Katalysator unter den üblichen Motorbetriebsbedingungen abbauen kann. Dabei ist es während der Startphase primär ein Sauerstoffmangel im Abgasweg, der einen weiteren Abbau von HC und CO im Oxidationskatalysator verhindert. Dieses Problem wird durch das beschriebene Verfahren beseitigt, indem gezielt dafür gesorgt wird, daß während der Startphase der Brennkraftmaschine eine ausreichende Sauerstoffmenge für die vollständige Oxidation der Kohlenwasserstoffe und des Kohlenmonoxids im Abgasweg bereitsteht.

Vorzugsweise wird die für die Startphase bereitgestellte Sauerstoffmenge dabei so bemessen, daß keine erhöhten Emissionen von Stickoxiden (NOx) stromabwärts des Abgasnachbehandlungssystems auftreten. Diese Maßnahme betrifft insbesondere den Fall, daß die erhöhte Sauerstoffmenge bereits in den Zylindern der Brennkraftmaschine vorliegt, so daß dort eine magere Verbrennung stattfindet. Das Luft-Kraftstoff-Verhältnis darf dann nicht so groß (das heißt so mager) gewählt werden, daß zuviel NOx produziert wird, welches die Abgasnachbehandlungseinrichtung durchbrechen könnte.

Gemäß einer bevorzugten Ausführungsform des Verfahrens wird im von der Brennkraftmaschine kommenden Abgasstrom zunächst eine Oxidation der Kohlenwasserstoffe und/oder des Kohlenmonoxids ausgeführt und anschließend eine Entfernung von Stickoxiden. Dies kann beispielsweise durch eine Anordnung entsprechender Katalysatoren an verschiedenen Positionen entlang des Abgasweges geschehen.

Die während der Startphase zur Verfügung stehende zusätzliche beziehungsweise ausreichende Sauerstoffmenge kann zu verschiedenen Zeitpunkten dem Abgasweg zugeführt werden. Insbesondere kann sie während des vorangehenden Auslaufens der Brennkraftmaschine, während des vorangehenden Stillstands und/oder während des betrachteten Startvorganges der Brennkraftmaschine bereitgestellt werden.

Des Weiteren können verschiedene Techniken zur Bereitstellung einer ausreichenden Sauerstoffmenge einzeln oder in Kombination eingesetzt werden. Zu diesen Techniken gehört insbesondere ein Öffnen der Drosselklappe; eine zusätzliche beziehungsweise separate Frischluftzufuhr zu den Zylindern über eine eigene Luftzuführung; eine variable Ventilzeitsteuerung mit einer Ventilüberlappung, das heißt einer gleichzeitigen Öffnung von Einlaß- und Auslaßventilen; eine Steuerung der Abgasrückführung; eine aktive Frischluftzufuhr in die Zylinder und/oder in den Abgasweg der Brennkraftmaschine.

Bei einer bevorzugten Weiterbildung des Verfahrens wird während des Startens der Brennkraftmaschine von einem frühen, vorzugsweise vom ersten Expansionstakt eines jeden Zylinders an eine Kraftstoffverbrennung in dem jeweiligen Zylinder durchgeführt. In diesem Falle wird der Startvorgang durch die Verbrennung unterstützt oder im Idealfall sogar allein bewirkt (Direktstart). Die Brennkraftmaschine kommt dann mit einem reduzierten Hilfsaggregat (Startermotor) oder sogar ganz ohne ein solches aus.

Die Erfindung betrifft ferner eine Brennkraftmaschine mit einem im Abgasweg angeordneten Abgasnachbehandlungssystem sowie mit einer Motorsteuereinheit, die dazu eingerichtet ist, ein Verfahren der oben erläuterten Art durchzuführen. Das heißt, daß die Motorsteuerung die Brennkraftmaschine und entsprechende Einrichtungen so ansteuert, daß während des Startens der Brennkraftmaschine eine für die Oxidation von Kohlenwasserstoffen und Kohlenmonoxid ausreichende Sauerstoffmenge bereitsteht. Die erhöhten HC- und CO-Emissionen während eines Startvorgangs können daher vom Abgasnachbehandlungssystem im Wesentlichen vollständig abgebaut werden.

Vorzugsweise handelt es sich bei der Brennkraftmaschine um eine solche mit einer Direkteinspritzung und Fremdzündung des Kraftstoffes. In diesem Falle kann insbesondere ein direktes Starten der Brennkraftmaschine ohne Verwendung eines Startermotors oder dergleichen erfolgen.

Gemäß einer Weiterbildung der Brennkraftmaschine enthält das Abgasnachbehandlungssystem einen im Abgasweg angeordneten Oxidationskatalysator und einen stromabwärts hiervon angeordneten Dreiwege-Katalysator. In diesem Falle kann durch den Dreiwege-Katalysator sichergestellt werden, daß bei einem Startvorgang erzeugte Stickoxide abgebaut beziehungsweise aufgefangen werden können, so daß sie nicht als schädliche Emissionen in Erscheinung treten.

Des Weiteren enthält die Brennkraftmaschine optional eine Einrichtung zur aktiven Frischluftzufuhr zur Brennkraftmaschine. Diese Einrichtung arbeitet vorzugsweise unabhängig vom "normalen" Ansaugsystem über den Ansaugkrümmer und die Drosselklappe. Die Einrichtung kann die Frischluft in den Ansaugkrümmer, direkt in die Zylinder, oder nur in den Abgasweg befördern.

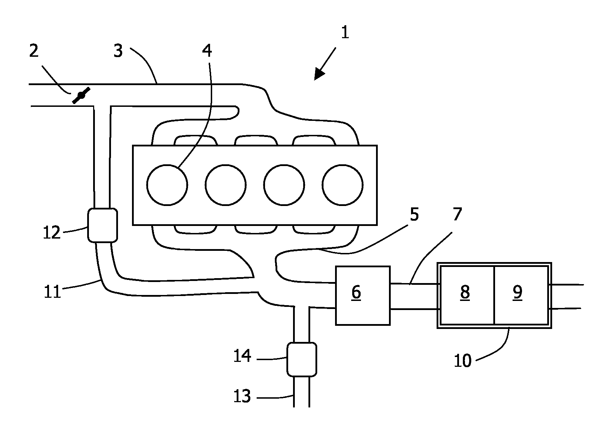

Im Folgenden wird die Erfindung mit Hilfe der Figur beispielhaft erläutert. Die einzige Figur zeigt schematisch eine Brennkraftmaschine, welche für die Durchführung des erfindungsgemäßen Verfahrens eingerichtet ist.

Bei der Brennkraftmaschine 1 handelt es sich vorzugsweise um eine Brennkraftmaschine mit Direkteinspritzung und Fremdzündung des in die Zylinder 4 eingespritzten Kraftstoffes. Die Brennkraftmaschine 1 weist einen Ansaugkrümmer 3 auf, wobei im Luftzufuhrweg eine Drosselklappe 2 angeordnet ist. Die während der Verbrennung erzeugten Abgase der Brennkraftmaschine 1 werden über einen Auslasskrümmer 5 in einen Abgasweg 7 geführt. Im Abgasweg ist ein Abgasnachbehandlungssystem bestehend aus einem HC- u nd CO-Oxidationskatalysator 6 sowie einem stromabwärts hiervon angeordneten Hauptkatalysator 10 vorgesehen. Eine Abgasrückführungsleitung 11 mit einem Abgasrückführungsventil 12 verbindet den Abgaskrümmer 5 mit dem Ansaugkrümmer 3, um eine externe Abgasrückführung (AGR) zu ermöglichen.

Während eines jeden Starts der Brennkraftmaschine 1 entstehen aufgrund der unvollständigen Verbrennung des Kraftstoffes Kohlenwasserstoffe HC und Kohlenmonoxid CO. Eine Magerverbrennung erzeugt darüber hinaus Schadstoffe in Form von Stickoxiden NOx. Die Mengen der genannten Schadstoffe sind während der Startphase so groß, daß die zu ihrer Entfernung vorgesehenen Katalysatoren 6, 10 sie aufgrund einer unzureichenden Sauerstoffmenge im Abgasweg nicht alle abbauen können, und zwar auch dann nicht, wenn die Katalysatoren an sich aufgrund eines nur kurzen zwischenzeitlichen Motorstillstands noch eine ausreichend hohe Betriebstemperatur für eine katalytische Aktivität aufweisen.

Aus diesem Grunde wird erfindungsgemäß die Brennkraftmaschine 1 so angesteuert, daß während einer Startphase, insbesondere während eines Neustarts nach einem verhältnismäßig kurzen Motorstillstand, während dessen das Abgasnachbehandlungssystem 6, 10 noch nicht unter seine Betriebstemperatur abgekühlt ist, eine ausreichende Sauerstoffmenge für die Oxidation aller während der Startphase anfallenden HC- und CO-Emissionen bereitgestellt wird. Diese Bereitstellung einer zugemessenen Sauerstoffmenge kann während der vorangehenden Auslaufphase (d.h. vom Abstellen der Zündung und/oder Kraftstoffzufuhr bis zum Erreichen des Motorstillstands), während des vorangehenden Motorstillstands (Drehzahl Null) und/oder während der Startphase (d.h. vom Motorstillstand bis zum Erreichen einer vorgegebenen Mindestdrehzahl) durchgeführt werden. Die Sauerstoff- beziehungsweise Frischluftmenge wird so bemessen, daß eine Oxidation der Kohlenwasserstoffe und des Kohlenmonoxids im Oxidationskatalysator möglich ist, ohne daß ein NOx-Durchbruch auftritt.

Für die technische Durchführung einer Bereitstellung von Sauerstoff gibt es verschiedene Möglichkeiten. Eine erste Gruppe von möglichen Verfahren ist dabei während des Auslaufens der Brennkraftmaschine 1 durchführbar:
1. Eine kontrollierte Öffnung (teilweise oder vollständig) der Drosselklappe 2, wenn durch Abstellen der Kraftstoffzufuhr und/oder der Zündung ein Anhalten des Motors veranlaßt wird. Bei weit geöffneter Drosselklappe 2 saugt die Brennkraftmaschine während der Auslaufumdrehungen ein Maximum an Frischluft in die Zylinder 4 und entfernt Restgase aus den Zylindern 4 und dem Abgasweg 7. Vorzugsweise wird die Drosselklappe unmittelbar nach dem Abschalten des Motors vollständig geöffnet, um die Zylinder und den Abgasweg 7 mit Frischluft zu spülen. Um dem Abgasweg 7 die erforderliche Menge an Frischluft zuzumessen, wird die Drosselklappe 2 während der Verzögerungs- beziehungsweise Auslaufphase der Brennkraftmaschine in kontrollierter Weise geschlossen, um die Konzentration an Luft im Abgassystem beizubehalten.
2. Ein zusätzlicher Frischluftschlitz zu den Zylindern 4 (nicht dargestellt), der mit dem Einlaßsystem oder der Umgebung verbunden ist, kann beim Abschalten der Brennkraftmaschine 1 geöffnet werden. Die abgeschaltete Brennkraftmaschine 1 saugt dann während ihres Auslaufens eine kontrollierte Menge an Frischluft durch die Zylinder 4 in den Abgasweg 7.
3. Eine Kontrolle des Ventilüberlapps durch Einrichtungen zur variablen Ventilzeitsteuerung nach dem Abschalten der Brennkraftmaschine 1 kann ebenfalls dazu verwendet werden, die den Zylindern 4 und dem Abgasweg 7 bereitgestellte Menge an Frischluft zuzumessen. Insbesondere kann hierbei die Schließzeit der Einlaßventile variiert werden.
4. Eine Kontrolle des AGR-Ventils 12 nach dem Abschalten der Brennkraftmaschine 1 erlaubt eine Regelung der Menge an rückgeführtem Abgas und damit indirekt der den Zylindern 4 zugeführten Frischluftmengen.
5. Ferner kann eine kontrollierte Aktivierung der Sekundärluftpumpe 14 eines Sekundärluftsystems 13 nach dem Abschalten der Brennkraftmaschine 1 erfolgen. Ein Sekundärluftsystem ist bei vielen Brennkraftmaschinen vorgesehen, um einem Katalysator aktiv Frischluft zuzuführen. Diese Möglichkeit kann insbesondere während des Auslaufens der Brennkraftmaschine genutzt werden.
   Die folgenden Möglichkeiten zur Bereitstellung einer ausreichenden Sauerstoffmenge im Abgassystem können während eines Motorstillstands, das heißt nach dem Anhalten der Brennkraftmaschine und vor dem erneuten Starten durchgeführt werden:
6. Eine aktiv aus einem Energiereservoir wie beispielsweise der Batterie des Kraftfahrzeuges oder einem Druckreservoir angetriebene Pumpe kann verwendet werden, um während des Motorstillstands zusätzliche Frischluft in den Abgasweg 7 einzuleiten. Bei der Pumpe kann es sich zum Beispiel um eine zusätzlich installierte oder um eine vorhandene Druckpumpe (zum Beispiel eine Sekundärluftpumpe 14) oder um eine zusätzlich installierte oder bereits vorhandene Vakuumpumpe (zum Beispiel die Vakuumpumpe für den Bremskraftverstärker) handeln.
7. Unter Verwendung der Lichtmaschine als Motor kann die Brennkraftmaschine 1 nach ihrem Abschalten angetrieben werden, um zusätzliche Frischluft in das Abgassystem 7 zu fördern.
8. Ebenso kann die Brennkraftmaschine auch durch einen anderen elektrischen, hydraulischen oder mechanischen Motor (zum Beispiel den Anlasser), der mit Energie aus einem Speicher (Batterie, Druckreservoir etc.) versorgt wird, angetrieben werden, um zusätzliche Frischluft in den Abgasweg 7 zu fördern.
   Schließlich gibt es Verfahren, die während des erneuten Anlassens der Brennkraftmaschine 1 anwendbar sind:
9. Ein kontrolliertes Öffnen der Drosselklappe 2 und das Starten mit einem mageren Luft-Kraftstoff-Gemisch beim Anlassen der Brennkraftmaschine 1.
10. Eine kontrollierte Ventilüberlappung bei einer variablen Ventilzeitsteuerung.
11. Eine Kontrolle des AGR-Ventils 12.
12. Eine aktiv aus einem Energiereservoir oder eine vom Druckreservoir angetriebene Pumpe kann verwendet werden, um während der Startphase zusätzliche Frischluft in den Abgasweg 7 einzuleiten (zur Ausgestaltung der Pumpe vgl. Ziffer 6).

Selbstverständlich können auch alle oben genannten Maßnahmen 1-12 in jeder möglichen Kombination miteinander ausgeführt werden.

Bei dem in der Figur dargestellten System ist ein spezieller Oxidationskatalysator 6 zur Oxidation von Kohlenwasserstoffen und Kohlenmonoxid stromaufwärts von (mindestens) einem als Dreiwege-Katalysator 10 ausgebildeten Hauptkatalysator angeordnet, wobei der Dreiwege-Katalysator 10 neben der Oxidation von HC und CO auch die Reduktion von NOx-Emissionen erlaubt.

Darüber hinaus ist in der Figur auch die Möglichkeit angedeutet, daß der Hauptkatalysator 10 in Strömungsrichtung zweiteilig aufgebaut ist, nämlich aus einem stromaufwärts gelegenen speziellen HC/CO-Oxidationsabschnitt 8 (nur für die Oxidation von HC und CO während des Motorstarts) und einem stromabwärts hiervon gelegenen Dreiwege-Katalysator-Abschnitt 9, welcher neben der HC/CO-Oxidation auch eine NOx-Reduktion erlaubt.

## Patentansprüche

1. Verfahren zum Starten einer Brennkraftmaschine (1), in deren Abgasweg (7) ein Abgasnachbehandlungssystem (6, 10) mit mindestens einem Oxidationskatalysator (6, 8) angeordnet ist,
**dadurch gekennzeichnet, daß**
während des Startens der Brennkraftmaschine (1) eine Sauerstoffmenge im Abgasweg (7) bereitgestellt wird, die eine möglichst vollständige Oxidation von Kohlenwasserstoffen und Kohlenmonoxid durch das Abgasnachbehandlungssystem (6, 10) erlaubt.

2. Verfahren nach Anspruch 1,
**dadurch gekennzeichnet, daß**
die bereitgestellte Sauerstoffmenge so bemessen wird, daß keine erhöhten Emissionen von Stickoxiden (NOx) stromabwärts des Abgasnachbehandlungssystems (6, 10) auftreten.

3. Verfahren nach Anspruch 1 oder 2,
**dadurch gekennzeichnet, daß**
im Abgasstrom aus der Brennkraftmaschine (1) zunächst eine Oxidation der Kohlenwasserstoffe oder des Kohlenmonoxid und anschließend eine Entfernung von Stickoxiden erfolgt.

4. Verfahren nach mindestens einem der Ansprüche 1 bis 3,
**dadurch gekennzeichnet, daß**
die Sauerstoffmenge während des vorangehenden Auslaufens, während des Stillstands und/oder während des Startens der Brennkraftmaschine (1) bereitgestellt wird.

5. Verfahren nach mindestens einem der Ansprüche 1 bis 4,
**dadurch gekennzeichnet, daß**
die Bereitstellung der Sauerstoffmenge durch Öffnen der Drosselklappe (2), durch zusätzliche Frischluftzufuhr zu den Zylindern (4), durch eine variable Ventilsteuerung mit Ventilüberlappung, durch eine Steuerung der Abgasrückführung (11, 12) und/oder durch eine aktive Frischluftzufuhr (13, 14) in die Zylinder und/oder in den Abgasweg (7) der Brennkraftmaschine (1) erfolgt.

6. Verfahren nach mindestens einem der Ansprüche 1 bis 5,
**dadurch gekennzeichnet, daß**
während des Startens der Brennkraftmaschine (1) von einem frühen Expansionstakt eines jeden Zylinders (4) an eine Kraftstoffverbrennung im Zylinder erfolgt.

7. Brennkraftmaschine (1) mit einem im Abgasweg (7) angeordneten Abgasnachbehandlungssystem (6, 10) und mit einer Motorsteuereinheit, die dazu eingerichtet ist, ein Verfahren nach mindestens einem der Ansprüche 1 bis 6 auszuführen.

8. Brennkraftmaschine nach Anspruch 7,
**dadurch gekennzeichnet, daß**
es sich um eine Brennkraftmaschine (1) mit Direkteinspritzung und Fremdzündung handelt.

9. Brennkraftmaschine nach Anspruch 7 oder 8,
**dadurch gekennzeichnet, daß**
das Abgasnachbehandlungssystem einen im Abgasweg (7) angeordneten Oxidationskatalysator (6, 8) und einen stromabwärts hiervon angeordneten Dreiwege-Katalysator (9) enthält.

10. Brennkraftmaschine nach mindestens einem der Ansprüche 7 bis 9,
**dadurch gekennzeichnet, daß**
diese eine Einrichtung (13, 14) zur aktiven Frischluftzufuhr zur Brennkraftmaschine (1) und/oder zum Abgasweg (7) enthält.
